# EUROPEAN PATENT APPLICATION

(11) **EP 4 421 829 A1**
(43) Date of publication of application: **28.08.2024**
(21) Application number: 22939838.3
(22) Date of filing: 04.11.2022
(51) Int. Cl.: H01F 1/057, H01F 41/02

(54) **NEODYMIUM-IRON-BORON MAGNET MATERIAL AND PREPARATION METHOD THEREFOR AND USE THEREOF, AND MOTOR**

(30) Priority: 29.04.2022 CN 202210494036
(71) Applicant: Fujian Golden Dragon Rare-earth Co., Ltd., Longyan, Fujian 366300 (CN)
(72) Inventor: MOU, Weiguo, Longyan, Fujian 366300 (CN); WANG, Chen, Longyan, Fujian 366300 (CN); HUANG, Zhigao, Longyan, Fujian 366300 (CN); FU, Gang, Longyan, Fujian 366300 (CN); XU, Deqin, Longyan, Fujian 366300 (CN)
(74) Representative: dompatent von Kreisler Selting Werner - Partnerschaft von Patent- und Rechtsanwälten mbB
(86) International application number: PCT/CN2022/129744
(87) International publication number: WO 2023/207021

(57) **Abstract**

The invention discloses a neodymium-iron-boron magnet material, a preparation method, use thereof and a motor. The neodymium-iron-boron magnet material of the invention comprises an amorphous RE-rich phase located in a grain boundary phase, wherein: the amorphous RE-rich phase is composed of elements TM, RE, Cu and Ga at an atom ratio of TM:RE:Cu:Ga=(15-30):(40-60):(10-25):(10-30); and the amorphous RE-rich phase accounts for 3-8% by volume of the grain boundary phase, wherein TM is Fe and Co, and RE is a rare earth element. The neodymium-iron-boron magnet material of the present invention can increase the coercivity without using heavy rare earth elements or using a small amount of heavy rare earth elements, while maintaining higher remanence and higher magnetic energy product.

## Description

### FIELD OF THE INVENTION

The invention specifically relates to a neodymium-iron-boron magnet material, a preparation method, use thereof and a motor.

### BACKGROUND OF THE INVENTION

The neodymium-iron-boron (RE-T-B) permanent magnet material with Nd₂Fe₁₄B as the main component has high remanence, coercivity and maximum magnetic energy product. It has excellent comprehensive magnetic properties and is widely used in high technologies such as computers, communications, military and the like. Motors are the main application field of neodymium-iron-boron permanent magnets, and their application in hybrid electric vehicles (HEVs) is particularly eye-catching. The general service life of material products used in automobiles should exceed 10 years, so the materials are required to have long-term stable and reliable performance. The performances of magnetic materials are generally characterized by the following four parameters: residual magnetic induction intensity (abbreviated as remanence, BRE), coercivity (Hcb), intrinsic coercivity (Hcj) and maximum magnetic energy product (BHmax). In order to further improve the magnetic properties of neodymium-iron-boron permanent magnets, a large amount of research work has been carried out worldwide.

The prior art discloses adding a certain amount of heavy rare earth elements Tb and Dy to the sintered NdFeB master alloy to increase thecoercivity of the magnet. However, Tb and Dy are strategic metals with limited reserves and high prices. In addition, while improving coercivity, it sacrifices the remanence and the magnetic energy product. At present, the intrinsic coercivity of neodymium-iron-boron magnets without heavy rare earth additions when the remanence is 14.0kGs is difficult to reach 19kOe or more, which is less than 1/3 of the theoretical intrinsic coercivity of NdFeB. Therefore, how to improve the intrinsic coercivity of RE-T-B series permanent magnet materials without using heavy rare earths or using less heavy rare earths while ensuring remanence and magnetic energy product is an issue that has been urgently needed to be solved in the field.

### SUMMARY OF THE INVENTION

The technical problem solved by the present invention is to provide a neodymium-iron-boron magnet material, a preparation method, use thereof and a motor by overcoming the existing technology's shortcomings of high cost, scarcity of raw materials, and reduced remanence and magnetic energy product by adding heavy rare earth elements to increase coercivity. The neodymium-iron-boron magnet material of the present invention can increase the coercivity without using heavy rare earth elements or using a small amount of heavy rare earth elements, while maintaining higher remanence and higher magnetic energy product.

The present invention solves the above technical problems through the following technical solutions:
The invention provides a neodymium-iron-boron magnet material, comprising an amorphous RE-rich phase located in a grain boundary phase, wherein: the amorphous RE-rich phase is composed of elements TM, RE, Cu and Ga at an atom ratio of TM:RE:Cu:Ga=(15-30):(40-60):(10-25):(10-30); and the amorphous RE-rich phase accounts for 3-8% by volume of the grain boundary phase, wherein TM is Fe and Co, and RE is a rare earth element.

The inventor found in the study that the existence of the amorphous RE-rich phase according to the present invention reduces the melting point of the grain boundary phase, which can improve the fluidity of the grain boundary phase, and is conducive to the formation of a continuous and uniform intergranular Nd-rich phase, thereby enhance the demagnetizing coupling ability of the grain boundary phase and increase the intrinsic intrinsic coercivity of the magnet.

In the present invention, the grain boundary phase may have a meaning conventionally understood in the field, and is generally a general term for a two-granule grain boundary phase and an intergranular triangular zone. The two-granule grain boundary phase is generally the grain boundary phase between two main phase particles.

In the invention, preferably, in the amorphous RE-rich phase, the TM has an atomic percentage of 15-30%, preferably 15-25%, more preferably 16%, 17%, 18%, 19% or 25%.

In some preferable examples of the present invention, the TM is only Fe.

In the invention, preferably, in the amorphous RE-rich phase, the RE has an atomic percentage of 40-60%, preferably 40-50%, such as 41%, 45%, 46%, 47%, 49% or 50%.

In the invention, preferably, in the amorphous RE-rich phase, the Ga has an atomic percentage of 10-20%, preferably 11%, 12%, 14%, 16%, 18% or 19%.

In the invention, preferably, in the amorphous RE-rich phase, the Cu has an atomic percentage of 12-25%, preferably 19%, 20%, 21%, 24% or 25%.

In some preferable examples of the present invention, the amorphous RE-rich phase has a composition of Fe₁₅₋₁₉RE₄₅₋₅₀Ga₁₂₋₁₉Cu₁₉₋₂₁, wherein numbers are atomic percentages of respective elements in the amorphous RE-rich phase.

In some preferable examples of the present invention, the amorphous RE-rich phase has a composition of Fe₁₈RE₄₇Ga₁₄Cu₂₁, wherein numbers are atomic percentages of respective elements.

In some preferable examples of the present invention, the amorphous RE-rich phase has a composition of Fe₁₅RE₄₉Ga₁₆Cu₂₀, wherein numbers are atomic percentages of respective elements.

In some preferable examples of the present invention, the amorphous RE-rich phase has a composition of Fe₂₅RE₄₀Ga₁₁Cu₂₄, wherein numbers are atomic percentages of respective elements.

In some preferable examples of the present invention, the amorphous RE-rich phase has a composition of Fe₁₆RE₄₅Ga₁₄Cu₂₅, wherein numbers are atomic percentages of respective elements.

In some preferable examples of the present invention, the amorphous RE-rich phase has a composition of Fe₁₇RE₄₅Ga₁₈Cu₂₀, wherein numbers are atomic percentages of respective elements.

In some preferable examples of the present invention, the amorphous RE-rich phase has a composition of Fe₁₉RE₄₁Ga₁₈Cu₁₂, wherein numbers are atomic percentages of respective elements.

In some preferable examples of the present invention, the amorphous RE-rich phase has a composition of Fe₁₆RE₄₆Ga₁₉Cu₁₉, wherein numbers are atomic percentages of respective elements.

In some preferable examples of the present invention, the amorphous RE-rich phase has a composition of Fe₁₇RE₅₀Ga₁₂Cu₂₁, wherein numbers are atomic percentages of respective elements.

In the invention, the amorphous RE-rich phase accounts for 3.5-7%, preferably 4.2%, 4.3%, 4.4%, 4.5%, 5.6%, 6.2% or 6.5% by volume of the grain boundary phase.

In the invention, those skilled in the art can generally understand that the neodymium-iron-boron magnet material generally further comprises a main phase whose composition is generally RE₂Fe₁₄B, wherein the numbers represent the atomic ratios of respective elements.

In the present invention, the grain size of the neodymium-iron-boron magnet material can be conventional in this field, generally 5-10 µm.

The invention further provides a neodymium-iron-boron magnet material, comprising following components in terms of mass percentage:
B: 0.85-1.2wt%;
Cu: 0.05-0.6wt%;
Al: 0-0.60wt%;
Ga: 0.05-0.6wt%;
wherein the contents of Ga, Cu and B satisfy the following formula: (B-0.4)Ga≤Cu≤(Ga+Cu)/2, wherein a sum of the contents of all components in the neodymium-iron-boron magnet material is 100%; the neodymium-iron-boron magnet material comprises the amorphous RE-rich phase as described above.

In the invention, B has a content of preferably 0.9-1.0wt%, for example 0.92wt%, 0.95wt%, 0.96wt% or 0.94wt%.

In the invention, Cu has a content of preferably 0.1-0.4wt%, for example 0.15wt%, 0.20wt%, 0.32wt%, 0.35% or 0.38%.

In the invention, Al has a content of preferably 0-0.5wt%, for example 0.2wt%.

In the invention, Ga has a content of preferably 0.1-0.5wt%, for example 0.2wt%, 0.22wt%, 0.35wt%, 0.39% or 0.45wt%.

In the present invention, those skilled in the art can generally understand that the neodymium-iron-boron magnet material further comprises a rare earth element RE, wherein the RE at least comprises Nd.

Wherein, the mass percentage of RE in the neodymium-iron-boron magnet material can be conventional in the art, preferably 27-33wt%, more preferably 28-32wt%, for example 29. 1wt%, 29.6wt%, 29.8wt%, 30.2 % or 31wt%.

Wherein, the RE preferably comprises Nd and Pr.

The mass percentage of Nd in the neodymium-iron-boron magnet material is preferably 21-27wt%, more preferably 22-25wt%, for example 22.35wt%, 22.4%, 23.25wt%, 23.8% or 24.6%.

The mass percentage of Pr in the neodymium-iron-boron magnet material is preferably 4-9wt%, more preferably 5-8wt%, for example 5.2wt%, 5.5wt%, 6.5wt%, 7.40 wt%, 7.45wt% or 7.75wt%.

In some preferable examples of the present invention, the RE does not comprise a heavy rare earth element. The heavy rare earth element generally comprises Dy and/or Tb.

In some preferable examples of the present invention, the RE further comprises a heavy rare earth element, and the heavy rare earth element comprises Dy and/or Tb.

Wherein, the mass percentage of the heavy rare earth element in the neodymium-iron-boron magnet material is preferably 0-2wt%, for example 0.2wt%, 0.25wt%, 0.3wt%, 0.4wt%, 0.5wt% or 1.5 wt%.

In the present invention, the neodymium-iron-boron magnet material preferably further comprises Co.

Wherein, the mass percentage of Co in the neodymium-iron-boron magnet material is preferably 0.3-1.2wt%, more preferably 0.4-0.8wt%, for example 0.42wt%, 0.45wt%, 0.5wt% or 0.52wt%.

In the invention, the neodymium-iron-boron magnet material preferably further comprises Zr.

Wherein, the mass percentage of Zr in the neodymium-iron-boron magnet material is preferably 0-0.5wt%, for example 0.15wt%, 0.18wt%, 0.35wt%, 0.45wt% or 0.46wt%.

In the invention, the neodymium-iron-boron magnet material can further comprise Ti.

Wherein, the mass percentage of Ti in the neodymium-iron-boron magnet material is preferably 0-0.3wt%, for example 0.1wt%.

In the invention, the neodymium-iron-boron magnet material can further comprise Nb.

Wherein, the content of Nb can be conventional in this field, preferably 0-0.3wt%, more preferably 0.1wt%.

In the present invention, those skilled in the art can generally understand that the neodymium-iron-boron magnet material further comprises Fe.

Wherein, the mass percentage of Fe in the neodymium-iron-boron magnet material can be as conventional in the art as that the sum of the contents of respective components of the neodymium-iron-boron magnet material is 100%, preferably 62-72wt%, more preferably 65-70wt%, for example 68.04wt%, 66.14wt%, 67.74wt%, 66.74wt%, 68.33wt%, 67.85wt% or 67.25wt%.

In some preferable examples of the present invention, the neodymium-iron-boron magnet material comprises the following components by mass of: 22.00-25.00% Nd, 5.00-7.00% Pr, 0.20-0.40% Dy, 0.30-0.40% Cu, 0.20-0.50% Ga, 0.40-0.60% Co, 0.30-0.50% Zr, 0.90-1.00% B and a balance of Fe.

In some preferable examples of the present invention, the neodymium-iron-boron magnet material comprises the following components by mass of: 22.35% Nd, 7.45% Pr, 0.20% Al, 0.15% Cu, 0.20% Ga, 0.50% Co, 0.15% Zr, 0.96% B and 68.04% Fe.

In some preferable examples of the present invention, the neodymium-iron-boron magnet material comprises the following components by mass of: 23.25% Nd, 7.75% Pr, 0.50% Al, 0.20% Cu, 0.22% Ga, 0.80% Co, 0.10% Nb, 0.10% Ti, 0.94% B and 66.14% Fe.

In some preferable examples of the present invention, the neodymium-iron-boron magnet material comprises the following components by mass of: 22.20% Nd, 7.40% Pr, 0.50% Dy, 0.20% Al, 0.15% Cu, 0.20% Ga, 0.50% Co, 0.15% Zr, 0.94% B and 67.74% Fe.

In some preferable examples of the present invention, the neodymium-iron-boron magnet material comprises the following components by mass of: 29.60% Nd, 1.50% Dy, 0.20% Al, 0.15% Cu, 0.20% Ga, 0.50% Co, 0.15% Zr, 0.96% B and 66.74% Fe.

In some preferable examples of the present invention, the neodymium-iron-boron magnet material comprises the following components by mass of: 22.40% Nd, 6.50% Pr, 0.20% Dy, 0.38% Cu, 0.45% Ga, 0.45% Co, 0.35% Zr, 0.94% B and 68.33% Fe.

In some preferable examples of the present invention, the neodymium-iron-boron magnet material comprises the following components by mass of: 23.80% Nd, 5.50% Pr, 0.30% Dy, 0.33% Cu, 0.39% Ga, 0.42% Co, 0.45% Zr, 0.95% B and 67.87% Fe.

In some preferable examples of the present invention, the neodymium-iron-boron magnet material comprises the following components by mass of: 24.60% Nd, 5.20% Pr, 0.40% Dy, 0.30% Cu, 0.35% Ga, 0.52% Co, 0.46% of Zr, 0.92% B and 67.25% Fe.

The invention further provides a preparation method for a neodymium-iron-boron magnet material, comprising following steps of:
S1: preparing a magnet blank from the respective components of the neodymium-iron-boron magnet material as described above; and
S2: subjecting the magnet blank to an aging treatment to achieve the neodymium-iron-boron magnet material, wherein the aging treatment comprises a primary aging and a secondary aging, and the cooling rate after the primary aging is 23-150°C/min.

In the present invention, the primary aging can be carried out by conventional methods in this field, and generally heating is sufficient.

In the present invention, the temperature of the primary aging can be conventional in the art, preferably 860-940°C, more preferably 880-920°C, such as 890°C, 900°C, or 910°C.

In the present invention, the time for the primary aging can be conventional in the art, preferably 2-4 hours, such as 3 hours.

In the present invention, the cooling rate is preferably 35-150°C/min, more preferably 40-80°C/min, such as 42°C/min, 45°C/min, 48°C/min, 50°C/min , 52°C/min, 56°C/min or 66°C/min.

In the present invention, the temperature after cooling in the primary aging can be conventional in this field, preferably 420-480°C, more preferably 450°C.

In the present invention, the temperature for the secondary aging can be conventional in the art, preferably 430-550°C, such as 480°C.

In the present invention, the time for the secondary aging can be conventional in the art, preferably 1-4 hours, such as 3.5 hours.

In S1, the preparation method of the magnet blank can be conventional in the art. Generally, the respective components for the neodymium-iron-boron magnet material are smelted, cast, pulverized, molded, and sintered in sequence.

Wherein, the smelting temperature can be conventional in the art, preferably 1550°C or less, more preferably 1480-1550°C, such as 1520°C.

Wherein, the smelting is generally carried out in a vacuum environment. The pressure of the vacuum environment can be conventional in the art, preferably 2×10⁻²Pa - 8×10⁻²Pa, for example 5×10⁻²Pa.

The casting method may be conventional in this field, preferably the rapid solidification casting method.

Wherein, the casting temperature may be conventional in the art, preferably 1390-1460°C, such as 1410°C.

Wherein, the thickness of the alloy casting sheet obtained after the casting can be conventional in this field, preferably 0.25-0.40 mm.

Wherein, the pulverization method can be conventional in this field, preferably hydrogen decrepitation pulverization and jet mill pulverization are carried out in sequence.

The hydrogen decrepitation pulverization generally includes the hydrogen absorption, dehydrogenation and cooling treatments.

The hydrogen pressure during the hydrogen absorption process can be conventional in the art, preferably 0.05-0.12MPa, more preferably 0.085MPa.

The dehydrogenation can be carried out by conventional methods in the art, preferably by raising the temperature under vacuum conditions. The temperature after heating can be conventional in the art, preferably 300-600°C, such as 500°C.

The jet mill pulverization can be carried out in a conventional atmosphere in this field, and is preferably carried out with an oxidizing gas content of no more than 100 ppm. Wherein, the oxidizing gas generally includes oxygen and/or water vapor.

The pressure of the grinding chamber during the jet mill pulverization can be conventional in the art, preferably 0.5-1MPa, more preferably 0.7MPa.

The particle size after jet mill pulverization can be conventional in the art, preferably 3-6 µm, such as 4.2 µm.

Wherein, preferably, a lubricant is added to the powder obtained after pulverization.

The lubricant can be conventional in the art, preferably zinc stearate.

The added amount of the lubricant can be conventional in the art, preferably 0.05-0.15%, such as 0.10%, where the percentage is the mass percentage of the lubricant to the powder.

Wherein, the shaping method can be conventional in this field, preferably magnetic field shaping.

The intensity of the magnetic field in the magnetic field shaping can be conventional in this field, and is preferably 1.8-2.5T.

The magnetic field shaping is preferably carried out in a protective atmosphere. The protective atmosphere may be conventional in the art, such as nitrogen.

The sintering temperature may be conventional in the art, preferably 1000-1100°C, such as 1085°C.

The sintering time can be conventional in the art, preferably 4-8 hours, such as 6 hours.

Wherein, in S1, cooling treatment is preferably included after the sintering.

The cooling treatment is preferably carried out under an inert atmosphere.

The inert atmosphere can be a conventional gas in the art that does not participate in the chemical reaction of the present invention, preferably nitrogen or an inert gas, and more preferably argon.

The pressure of the inert atmosphere can be conventional in the art, preferably 0.01-0.1MPa, more preferably 0.05MPa.

The invention further provides a neodymium-iron-boron magnet material prepared by the above preparation method.

The present invention provides use of the above-mentioned neodymium-iron-boron magnet material in a motor.

The present invention further provides a motor comprising the neodymium-iron-boron magnet material as described above.

On the basis of common sense in the field, the above preferred conditions can be combined arbitrarily to obtain the preferred examples of the present invention.

The reagents and raw materials used in the present invention are all commercially available.

The present invention has the following positive progressive effects:
(1) According to the technical solution of the present invention, when heavy rare earth elements are not added and the remanence exceeds 14kGs, the intrinsic intrinsic coercivity can be increased to 19kOe or more, or even as high as 20.60kOe, and the maximum magnetic energy product can be higher than 48 MGOe, even as high as 50.95 MGOe;
(2) According to the technical solution of the present invention, when heavy rare earth elements are added in a small amount (≤1.5wt%) and the remanence is higher than 13.5 kGs, the intrinsic coercivity is increased to 21kOe or more, or even as high as 23.3kOe, and at the same time, the maximum magnetic energy product can be higher than 43 MGOe, or even as high as 46.13 MGOe.

### BRIEF DESCRIPTION OF THE DRAWINGS

Fig. 1 shows the TEM pattern of the neodymium-iron-boron magnet material in Example 1;
Fig. 2 shows the TEM pattern of the neodymium-iron-boron magnet material in Example 1, wherein the arrows in Fig. 2 point to the amorphous RE-rich phase.

### DETAILED DESCRIPTION OF THE INVENTION

The present invention is further described below by means of examples, but the present invention is not limited to the scope of the described examples. Experimental methods that do not indicate specific conditions in the following examples should be selected according to conventional methods and conditions, or according to product specifications.

### Examples 1-7 and Comparative Examples 1-7

The raw materials were prepared according to the ingredient list in Table 1. The preparation steps are as follows:
(1) Smelting: the prepared raw materials were put into a high-frequency vacuum induction melting furnace with an absolute pressure of 5×10⁻²Pa, and smelt into a molten liquid at a temperature of 1520°C.
(2) Casting: An alloy casting sheet was achieved by using rapid solidification casting method with a casting temperature of 1410°C.
(3) Pulverization: hydrogen decrepitation pulverization and jet mill pulverization were carried out in sequence.

The hydrogen decrepitation pulverization includes hydrogen absorption, dehydrogenation and cooling treatment. The hydrogen absorption was carried out under a hydrogen pressure of 0.085MPa. The dehydrogenation was carried out under the condition of evacuation while raising temperature. The dehydrogenation temperature was 500°C.

The jet mill pulverization was performed with an oxidizing gas content of 100 ppm or less. The particle size obtained by pulverization was 4.2 µm, and the oxidizing gas referred to oxygen and water vapor. The pressure in the grinding chamber of jet mill pulverization was 0.70MPa. After pulverization, a lubricant being zinc stearate was added in an amount of 0.10% by weight of the powder obtained by the jet mill pulverization.

(4) Shaping: Magnetic field shaping was performed under a magnetic field strength of 1.8-2.5T with the protection of nitrogen atmosphere.

(5) Sintering: Sintering was carried out under vacuum conditions with an absolute pressure of 5×10⁻³Pa, a sintering temperature of 1085°C, and a sintering time of 6 hours.

(6) Cooling: Argon gas was introduced to bring the pressure to 0.05MPa for cooling.

(7) Aging treatment: The temperature for the primary aging was 900°C and the time for the primary aging was 3h; after the primary aging, it was cooled to 450°C, and the cooling rates are as shown in Table 2; then the secondary aging was carried out, and the temperature for the secondary aging was 480°C, the time for the secondary aging was 3.5h, and finally, a neodymium-iron-boron magnet material was obtained.

Those skilled in the art know that there is almost no difference between the contents of respective components in the neodymium-iron-boron magnet materials and the contents of respective components in the raw materials thereof. Therefore, the contents of respective components of the neodymium-iron-boron magnet materials obtained in various examples and comparative examples are as shown in Table 1.

**Table 1 The list of ingredients in the raw materials for neodymium-iron-boron magnet material in Examples and Comparative Examples**

| | Ingredients/% | | | | | | | | | | | | |
|---|---|---|---|---|---|---|---|---|---|---|---|---|---|
| | Nd | Pr | Dy | Tb | Al | Cu | Ga | Co | Zr | Nb | Ti | B | Fe |
| Example 1 | 22.35 | 7.45 | / | / | 0.20 | 0.15 | 0.20 | 0.50 | 0.15 | / | / | 0.96 | Balance |
| Example 2 | 23.25 | 7.75 | / | / | 0.50 | 0.20 | 0.22 | 0.80 | / | 0.10 | 0.10 | 0.94 | Balance |
| Example 3 | 22.20 | 7.40 | 0.50 | / | 0.20 | 0.15 | 0.20 | 0.50 | 0.15 | / | / | 0.96 | Balance |
| Example 4 | 29.6 | / | 1.5 | / | 0.20 | 0.15 | 0.20 | 0.50 | 0.15 | / | / | 0.96 | Balance |
| Example 5 | 22.4 | 6.5 | 0.2 | / | / | 0.38 | 0.45 | 0.45 | 0.35 | / | / | 0.94 | Balance |
| Example 6 | 23.8 | 5.5 | 0.3 | / | / | 0.32 | 0.39 | 0.42 | 0.45 | / | / | 0.95 | Balance |
| Example 7 | 24.6 | 5.2 | 0.4 | / | / | 0.30 | 0.35 | 0.52 | 0.46 | / | / | 0.92 | Balance |
| Comparative Example 1 | 22.35 | 7.45 | / | / | 0.20 | 0.06 | 0.20 | 0.50 | 0.15 | / | / | 0.96 | Balance |
| Comparative Example 2 | 22.35 | 7.45 | / | / | 0.20 | 0.15 | 0.30 | 0.50 | 0.15 | / | / | 0.96 | Balance |
| Comparative Example 3 | 22.35 | 7.45 | / | / | 0.20 | 0.05 | 0.08 | 0.50 | 0.15 | / | / | 0.96 | Balance |
| Comparative Example 4 | 22.35 | 7.45 | / | / | 0.20 | 0.65 | 0.70 | 0.50 | 0.15 | / | / | 0.96 | Balance |
| Comparative Example 5 | 22.35 | 7.45 | / | / | 0.20 | 0.15 | 0.20 | 0.50 | 0.15 | / | / | 0.96 | Balance |
| Comparative Example 6 | 22.35 | 7.45 | / | / | 0.20 | 0.15 | 0.20 | 0.50 | 0.15 | / | / | 0.96 | Balance |
| Comparative Example 7 | 22.35 | 7.45 | / | / | 0.20 | 0.10 | 0.20 | 0.50 | 0.15 | / | / | 0.96 | Balance |

| | | | | | | | | | | | | | |
|---|---|---|---|---|---|---|---|---|---|---|---|---|---|
| In Table 1, "/" means that the element is not added or not detected; and "Balance" refers to the content obtained by subtracting the contents of other elements from 100%. | | | | | | | | | | | | | |

### Effect Examples

### 1. Test of magnetic properties

By using the closed loop demagnetization curve testing equipment NIM-62000 manufactured by the China Institute of Metrology, the neodymium-iron-boron magnet materials obtained in Examples 1-4 and Comparative Examples 1-7 were tested for magnetic properties at a testing temperature of 20°C to obtain the data on remanence (BRE), intrinsic coercivity (Hcj), maximum magnetic energy product (BHmax) and squareness (Hk/Hcj). The testing results are shown in Table 2.

### 2. Characterization for the volume ratio of the amorphous RE-rich phase

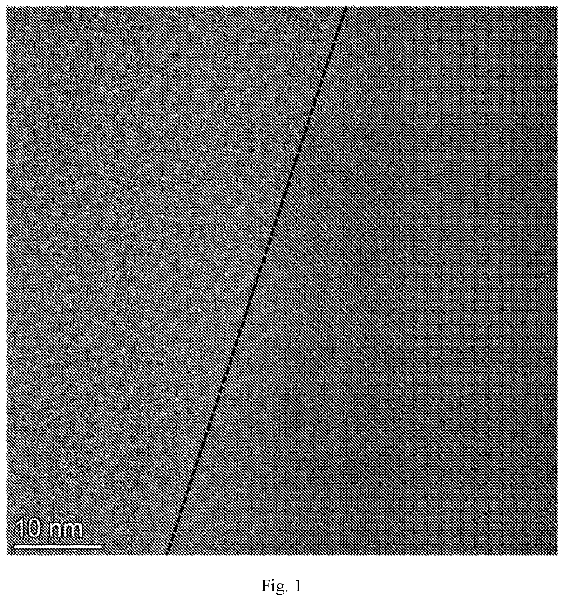

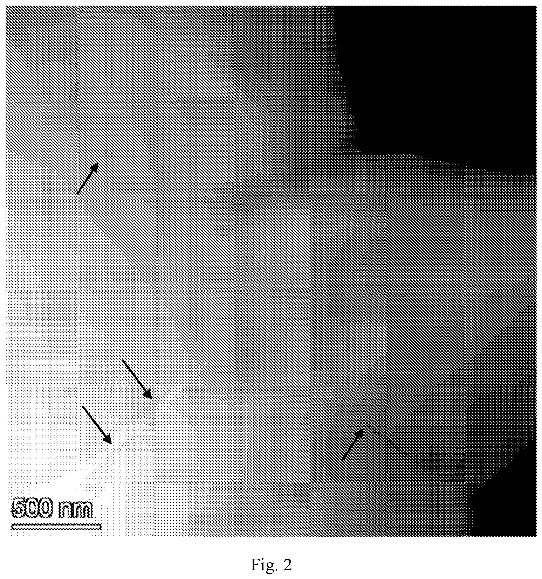

TEM tests were performed on the neodymium-iron-boron magnet materials obtained in the Examples and Comparative Examples to characterize the volume ratio of the amorphous RE-rich phase to the grain boundary phase. Specifically, TEM was used to perform diffraction spot analysis on the grain boundary phase. The amorphous neodymium-rich phase was identified and calibrated based on the annular diffraction spots inherent in the amorphous state (Fig. 1), and then the volume ratio of the amorphous RE-rich phase was statistically calculated using a scanning transmission electron images (Fig. 2). The results are shown in Table 2.

### 3. Determination of the compositions of the amorphous RE-rich phase

TEM-EDS (energy dispersion) analysis was used to quantitatively analyze the ingredients of the amorphous RE-rich phase, and the results are shown in Table 3.

**Table 2 List of the characterization results for magnetic properties of the products from the Examples and Comparative Examples**

| Examples /Comparative Examples | Does it satisfy (B-0.4)Ga≤Cu≤( Ga+Cu)/2? | Cooling rate after primary aging (°C/min ) | Ratio of the amorpho us RE-rich phase /% | Magnetic properties | | | |
|---|---|---|---|---|---|---|---|
| | | | | B_{RE} (kGs) | H_{cJ} (kOe) | BHmax (MGOe ) | Hₖ/H_{c J} |
| Example 1 | Yes | 56 | 4.5 | 14.49 | 19.20 | 49.99 | 0.99 |
| Example 2 | Yes | 42 | 6.2 | 14.27 | 20.60 | 48.48 | 0.99 |
| Example 3 | Yes | 66 | 4.5 | 13.92 | 21.60 | 46.13 | 0.98 |
| Example 4 | Yes | 45 | 4.3 | 13.53 | 23.30 | 43.59 | 0.99 |
| Example 5 | Yes | 50 | 4.2 | 14.49 | 19.10 | 50.95 | 0.99 |
| Example 6 | Yes | 48 | 4.3 | 14.47 | 19.8 | 50.82 | 0.99 |
| Example 7 | Yes | 52 | 4.2 | 14.45 | 20.0 | 50.75 | 0.99 |
| Comparative Example 1 | No | 56 | 1.7 | 14.49 | 18.10 | 49.99 | 0.98 |
| Comparative Example 2 | No | 56 | 1.9 | 14.49 | 18.20 | 49.99 | 0.97 |
| Comparative Example 3 | Yes | 56 | 1.1 | 14.49 | 17.70 | 49.99 | 0.99 |
| Comparative Example 4 | Yes | 56 | 10 | 14.28 | 18.70 | 48.55 | 0.94 |
| Comparative Example 5 | Yes | 15 | 1.5 | 14.49 | 17.90 | 49.99 | 0.96 |
| Comparative Example 6 | Yes | 180 | 13 | 14.41 | 17.70 | 49.44 | 0.94 |
| Comparative Example 7 | No | 56 | 2.5 | 14.46 | 18.50 | 49.78 | 0.97 |

**Table 3 List of the ingredients in the amorphous RE-rich phase of Examples and Comparative Examples**

| Examples/Comparative Examples | Compositions of the amorphous RE-rich phase (at%) |
|---|---|
| Example 1 | Fe₁₈RE₄₇Ga₁₄Cu₂₁ |
| Example 2 | Fe₁₅RE₄₉Ga₁₆Cu₂₀ |
| Example 3 | Fe₂₅RE₄₀Ga₁₁Cu₂₄ |
| Example 4 | Fe₁₆RE₄₅Ga₁₄Cu₂₅ |
| Example 5 | Fe₁₉RE₄₁Ga₁₈Cu₁₂ |
| Example 6 | Fe₁₆RE₄₆Ga₁₉Cu₁₉ |
| Example 7 | Fe₁₇RE₅₀Ga₁₂Cu₂₁ |
| Comparative Example 1 | Fe₁₇RE₄₈Ga₁₄Cu₂₁ |
| Comparative Example 2 | Fe₁₉RE₄₇Ga₁₄Cu₂₀ |
| Comparative Example 3 | Fe₁₈RE₄₄Ga₁₄Cu₂₄ |
| Comparative Example 4 | Fe₂₀RE₄₅Ga₁₄Cu₂₁ |
| Comparative Example 5 | Fe₂₁RE₄₇Ga₁₄Cu₁₈ |
| Comparative Example 6 | Fe₁₉RE₄₉Ga₁₁Cu₂₁ |
| Comparative Example 7 | Fe₂₃RE₄₂Ga₁₄Cu₂₁ |

| | |
|---|---|
| In Table 3, the numbers in the compositions of the amorphous RE-rich phases of respective Examples and Comparative examples represent the atomic percentages of respective elements. | |

It can be seen from Table 2 that the specific element ratio and preparation process according to the present invention enable the formation of an amorphous neodymium-rich phase with a specific volume ratio in the grain boundary phase. Correspondingly, without adding a heavy rare earth element, the produced neodymium-iron-boron magnet materials having a remanence BRE that is higher than 14kGs, and an intrinsic coercivity Hcj that is higher than 19 kOe, even as high as 20.60kOe; with the addition of a small amount of heavy rare earth elements, the produced neodymium-iron-boron magnet materials having a remanence BRE that is higher than 13.50kGs, and an intrinsic coercivity Hcj that is higher than 21 kOe, even increased to 23.30 kOe. The element ratios in Comparative Example 1, Comparative Example 2 and Comparative Example 7 do not satisfy the (B-0.4)Ga≤Cu≤(Ga+Cu)/2 of the present invention, which the area ratio of the amorphous neodymium-rich phase formed in the grain boundary phase less than 3%, and the resulting neodymium-iron-boron magnet materials have a low intrinsic coercivity Hcj below 19 kOe. The element ratios of Comparative Example 3 and Comparative Example 4 satisfy the requirements of the formula (B-0.4)Ga≤Cu≤(Ga+Cu)/2, but the Cu element content is respectively lower or higher than the range limited by this application, which results in the area ratio of the amorphous neodymium-rich phase formed in the grain boundary phase being too small or too large, causing the intrinsic coercivity Hcj of the neodymium-iron-boron magnet materials to be lower than 19 kOe. The cooling rates after the primary aging in Comparative Example 5 and Comparative Example 6 were respectively lower and higher than the range limited by the present invention, which results in the area ratio of the amorphous neodymium-rich phase formed in the grain boundary phase being too small or too large, so that the intrinsic coercivity Hcj of the obtained neodymium-iron-boron magnet materials is lower than 18kOe.

## Claims

1. A neodymium-iron-boron magnet material, **characterized by** comprising an amorphous RE-rich phase located in a grain boundary phase, wherein: the amorphous RE-rich phase is composed of elements TM, RE, Cu and Ga at an atom ratio of TM:RE:Cu:Ga=(15-30):(40-60):(10-25):(10-30); and the amorphous RE-rich phase accounts for 3-8% by volume of the grain boundary phase, wherein TM is Fe and Co, and RE is a rare earth element.

2. The neodymium-iron-boron magnet material according to claim 1, **characterized in that**:
in the amorphous RE-rich phase, the TM has an atomic percentage of 15-30%, preferably 15-25%, more preferably 16%, 17%, 18%, 19% or 25%; and/or
the TM is only Fe; and/or
in the amorphous RE-rich phase, the RE has an atomic percentage of 40-60%, preferably 40-50%, such as 41%, 45%, 46%, 47%, 49% or 50%; and/or
in the amorphous RE-rich phase, the Ga has an atomic percentage of 10-20%, preferably 11%, 12%, 14%, 16%, 18% or 19%; and/or
in the amorphous RE-rich phase, the Cu has an atomic percentage of 12-25%, preferably 19%, 20%, 21%, 24% or 25%; or
the amorphous RE-rich phase has a composition of Fe₁₅₋₁₉RE₄₅₋₅₀Ga₁₂₋₁₉Cu₁₉₋₂₁, wherein numbers are atomic percentages of respective elements in the amorphous RE-rich phase; or
the amorphous RE-rich phase has a composition of Fe₁₈RE₄₇Ga₁₄Cu₂₁, Fe₁₅RE₄₉Ga₁₆Cu₂₀, Fe₂₅RE₄₀Ga₁₁Cu₂₄, Fe₁₆RE₄₅Ga₁₄Cu₂₅, Fe₁₇RE₄₅Ga₁₈Cu₂₀, Fe₁₉RE₄₁Ga₁₈Cu₁₂, Fe₁₆RE₄₆Ga₁₉Cu₁₉ or Fe₁₇RE₅₀Ga₁₂Cu₂₁, wherein numbers are atomic percentages of respective elements in the amorphous RE-rich phase; and/or
the amorphous RE-rich phase accounts for 3.5-7%, preferably 4.2%, 4.3%, 4.4%, 4.5%, 5.6%, 6.2% or 6.5% by volume of the grain boundary phase.

3. A neodymium-iron-boron magnet material, **characterized by** comprising following components in terms of mass percentage:
B: 0.85-1.2wt%;
Cu: 0.05-0.6wt%;
Al: 0-0.60wt%;
Ga: 0.05-0.6wt%;
wherein the contents of Ga, Cu and B satisfy the following formula: (B-0.4)Ga≤Cu≤(Ga+Cu)/2, wherein a sum of the contents of all components in the neodymium-iron-boron magnet material is 100%.

4. The neodymium-iron-boron magnet material according to claim 3, **characterized in that**:
B has a content of 0.9-1.0wt%, preferably 0.92wt%, 0.95wt%, 0.96wt% or 0.94wt%; and/or
Cu has a content of 0.1-0.4wt%, preferably 0.15wt%, 0.20wt%, 0.32wt%, 0.35% or 0.38%; and/or
Al has a content of 0-0.5wt%, preferably 0.2wt%; and/or
Ga has a content of 0.1-0.5wt%, preferably 0.2wt%, 0.22wt%, 0.35wt%, 0.39% or 0.45wt%; and/or
the neodymium-iron-boron magnet material further comprises a rare earth element RE, wherein the RE at least comprises Nd; the mass percentage of RE in the neodymium-iron-boron magnet material is preferably 27-33wt%, more preferably 28-32wt%, and further preferably 29.1wt%, 29.6wt%, 29.8wt%, 30.2 % or 31wt%; the RE preferably comprises Nd and Pr; the mass percentage of Nd in the neodymium-iron-boron magnet material is preferably 21-27wt%, more preferably 22-25wt%, and further preferably 22.35wt%, 22.4%, 23.25wt%, 23.8% or 24.6%; the mass percentage of Pr in the neodymium-iron-boron magnet material is preferably 4-9wt%, more preferably 5-8wt%, and further preferably 5.2wt%, 5.5wt%, 6.5wt%, 7.40 wt%, 7.45wt% or 7.75wt%; and/or
the RE further comprises a heavy rare earth element; the heavy rare earth element preferably comprises Dy and/or Tb; the mass percentage of the heavy rare earth element in the neodymium-iron-boron magnet material is preferably 0-2wt%, more preferably 0.2wt%, 0.25wt%, 0.3wt%, 0.4wt%, 0.5wt% or 1.5 wt%; and/or
the neodymium-iron-boron magnet material further comprises Co; the mass percentage of Co in the neodymium-iron-boron magnet material is preferably 0.3-1.2wt%, more preferably 0.4-0.8wt%, and further preferably 0.42wt%, 0.45wt%, 0.5wt% or 0.52wt%; and/or
the neodymium-iron-boron magnet material further comprises Zr; the mass percentage of Zr in the neodymium-iron-boron magnet material is preferably 0-0.5wt%, more preferably 0.15wt%, 0.18wt%, 0.35wt%, 0.45wt% or 0.46wt%; and/or
the neodymium-iron-boron magnet material further comprises Ti; the mass percentage of Ti in the neodymium-iron-boron magnet material is preferably 0-0.3wt%, more preferably 0.1wt%; and/or
the neodymium-iron-boron magnet material further comprises Nb; the mass percentage of Nb in the neodymium-iron-boron magnet material is preferably 0-0.3wt%, more preferably 0.1wt%; and/or
the neodymium-iron-boron magnet material further comprises Fe; the mass percentage of Fe in the neodymium-iron-boron magnet material is preferably 62-72wt%, more preferably 65-70wt%, and further preferably 68.04wt%, 66.14wt%, 67.74wt%, 66.74wt %, 68.33wt%, 67.85wt% or 67.25wt%.

5. The neodymium-iron-boron magnet material according to claim 3, **characterized in that**:
the neodymium-iron-boron magnet material comprises the following components by mass of: 22.00-25.00% Nd, 5.00-7.00% Pr, 0.20-0.40% Dy, 0.30-0.40% Cu, 0.20-0.50% Ga, 0.40-0.60% Co, 0.30-0.50% Zr, 0.90-1.00% B and a balance of Fe; or
the neodymium-iron-boron magnet material comprises the following components by mass of: 22.35% Nd, 7.45% Pr, 0.20% Al, 0.15% Cu, 0.20% Ga, 0.50% Co, 0.15% Zr, 0.96% B and 68.04% Fe; or
the neodymium-iron-boron magnet material comprises the following components by mass of: 23.25% Nd, 7.75% Pr, 0.50% Al, 0.20% Cu, 0.22% Ga, 0.80% Co, 0.10% Nb, 0.10% Ti, 0.94% B and 66.14% Fe; or
the neodymium-iron-boron magnet material comprises the following components by mass of: 22.20% Nd, 7.40% Pr, 0.50% Dy, 0.20% Al, 0.15% Cu, 0.20% Ga, 0.50% Co, 0.15% Zr, 0.94% B and 67.74% Fe; or
the neodymium-iron-boron magnet material comprises the following components by mass of: 29.60% Nd, 1.50% Dy, 0.20% Al, 0.15% Cu, 0.20% Ga, 0.50% Co, 0.15% Zr, 0.96% B and 66.74% Fe; or
the neodymium-iron-boron magnet material comprises the following components by mass of: 22.40% Nd, 6.50% Pr, 0.20% Dy, 0.38% Cu, 0.45% Ga, 0.45% Co, 0.35% Zr, 0.94% B and 68.33% Fe; or
the neodymium-iron-boron magnet material comprises the following components by mass of: 23.80% Nd, 5.50% Pr, 0.30% Dy, 0.33% Cu, 0.39% Ga, 0.42% Co, 0.45% Zr, 0.95% B and 67.87% Fe; or
the neodymium-iron-boron magnet material comprises the following components by mass of: 24.60% Nd, 5.20% Pr, 0.40% Dy, 0.30% Cu, 0.35% Ga, 0.52% Co, 0.46% of Zr, 0.92% B and 67.25% Fe.

6. The neodymium-iron-boron magnet material according to any one of claims 3-5, **characterized in that** the neodymium-iron-boron magnet material comprises the amorphous RE-rich phase according to claim 1 or 2.

7. A preparation method for a neodymium-iron-boron magnet material **characterized by** comprising following steps of:
S1: preparing a magnet blank from the respective components of the neodymium-iron-boron magnet material according to any one of claims 3-5; and
S2: subjecting the magnet blank to an aging treatment to achieve the neodymium-iron-boron magnet material,
wherein the aging treatment comprises a primary aging and a secondary aging, and the cooling rate after the primary aging is 23-150°C/min;
wherein the first-stage aging is performed at a temperature of preferably 860-940°C, more preferably 880-920°C, further preferably 890°C, 900°C or 910°C;
the first-stage aging is performed for a time of 2-4h, more preferably 3h;
the cooling rate is preferably 35-150°C/min, more preferably 40-80°C/min, further preferably 42°C/min, 45°C/min, 48°C/min, 50°C/min , 52°C/min, 56°C/min or 66°C/min;
the temperature after cooling in the primary aging is preferably 420-480°C, more preferably 450°C;
the secondary aging is performed at a temperature of preferably 430-550°C, more preferably 480°C;
the secondary aging is performed for a time of preferably 1-4h, more preferably 3.5h.

8. A neodymium-iron-boron magnet material prepared by the preparation method according to claim 7.

9. Use of the neodymium-iron-boron magnet material according to any one of claims 1-6 and 8 in a motor.

10. A motor comprising the neodymium-iron-boron magnet material according to any one of claims 1-6 and 8.
